# EUROPÄISCHE PATENTSCHRIFT

(11) **EP 3 735 433 B1**
(45) Veröffentlichungstag und Bekanntmachung des Hinweises auf die Patenterteilung: **07.02.2024**
(21) Anmeldenummer: 18816121.0
(22) Anmeldetag: 18.12.2018
(51) Int. Cl.: C08G 59/50, C08L 63/00

(54) **EPOXIDHARZ-ZUSAMMENSETZUNG FÜR BESCHICHTUNGSZWECKE**
EPOXY RESIN COMPOSITION FOR COATING APPLICATIONS
COMPOSITION DE RÉSINE ÉPOXYDE DESTINÉE À UN REVÊTEMENT

(30) Priorität: 03.01.2018 EP 18150158
(43) Veröffentlichungstag der Anmeldung: 11.11.2020
(73) Patentinhaber: SIKA TECHNOLOGY AG, 6340 Baar (CH)
(72) Erfinder: GRÖTZINGER, Jochen, 73525 Schwäbisch Gmünd (DE); VON DER BRÜGGEN, Uwe, 74909 Meckesheim (DE); VIERTEL, Johannes, 71665 Vaihingen (DE); KASEMI, Edis, 8046 Zürich (CH)
(74) Vertreter: Sika Patent Attorneys
(86) Internationale Anmeldenummer: PCT/EP2018/085496
(87) Internationale Veröffentlichungsnummer: WO 2019/134821

(56) Entgegenhaltungen:
- EP-A1- 2 752 437
- US-A- 3 506 603

## Beschreibung

### Technisches Gebiet

Die Erfindung betrifft das Gebiet der kalthärtenden Epoxidharz-Zusammensetzungen, sowie Beschichtungen, insbesondere für Böden.

### Stand der Technik

Beschichtungsprodukte auf Epoxidharz-Basis sind im Bauwesen weit verbreitet. Sie bestehen aus flüssigen Harz- und Härterkomponenten, welche vor der Applikation gemischt werden und dann bei Umgebungstemperaturen im Bereich von ca. 5 bis 35°C zur festen Beschichtung ausreagieren. Da die Härterkomponente als hauptsächlichen Reaktivbestandteil Amine enthält, haben solche Produkte bei der Aushärtung eine Neigung zu Oberflächenstörungen wie Trübungen, Flecken, Rauheit oder Klebrigkeit, was auch als "Blushing" bezeichnet wird. Blushing wird durch die Salzbildung der Amine mit Kohlendioxid (CO₂) aus der Luft verursacht und tritt besonders bei hoher Luftfeuchtigkeit und tiefen Temperaturen auf. Insbesondere in ästhetisch anspruchsvollen Beschichtungsanwendungen wie Bodenbelägen ist das Auftreten von Blushing-bedingten Oberflächenstörungen äusserst unvorteilhaft und erfordert meist ein aufwendiges Nachbearbeiten bzw. Überbeschichten der schadhaften Stellen oder häufig sogar der ganzen Beschichtung.

Mittels Verdünnern wird die Viskosität einer Epoxidharz-Zusammensetzung gesenkt, damit sie einfach applizierbar ist. Gleichzeitig vermindern Verdünner auch die Anfälligkeit auf Blushing. Die üblichen Verdünner, wie beispielsweise Benzylalkohol, sind flüchtige Verbindungen (VOC oder SVOC), welche bei der Aushärtung nicht in die Harzmatrix eingebaut werden und somit zu Emissionen führen. Für emissionsarme Produkte, wie sie von Verbrauchern zunehmend nachgefragt werden, können Verdünner deshalb nur in geringer Menge oder gar nicht verwendet werden.

Beschleuniger wie Phenole oder Mannich-Basen führen zu einer rascheren Aushärtung bei kalten Temperaturen sowie ebenfalls zu einer Reduktion der Anfälligkeit auf Blushing. Solche Beschleuniger sind aber geruchsintensiv, toxikologisch nicht unbedenklich und vermindern die Lichtechtheit der Beschichtung, indem sie das Vergilben verstärken. Als Beschleuniger können auch Säuren wie Salicylsäure oder p-Toluolsulfonsäure eingesetzt werden. Diese erhöhen die Viskosität aber stark und führen teilweise ebenfalls zu verstärkter Vergilbung. Zur Verminderung von Blushing und zur Verdünnung kann auch mit speziellen Aminen gearbeitet werden, beispielsweise mit alkylierten Polyaminen. Diese sind aber teuer und führen oft zu einer verlangsamten Aushärtung in der Kälte. Zur Reduktion von Blushing werden weiterhin auch hydrophobe Additive eingesetzt, beispielsweise Wachse, welche auf der Beschichtung aufschwimmen und diese vor dem Kontakt mit der Luftfeuchtigkeit abschirmen. Die Wirkung solcher Additive ist aber oft nicht ausreichend und hängt stark von der Zusammensetzung der Beschichtung ab.

Die EP 2 752 437 offenbart eine Epoxidharz-Zusammensetzung umfassend ein Epoxid-Flüssigharz sowie Bis(aminomethyl)cyclohexan.

### Darstellung der Erfindung

Aufgabe der vorliegenden Erfindung ist es daher, eine für Beschichtungszwecke geeignete Epoxidharz-Zusammensetzung zur Verfügung zu stellen, die emissionsarm ist, auch bei feuchtkalten Bedingungen schnell und ohne Blushing-bedingte Oberflächenstörungen aushärtet und dabei mechanisch hochwertige Beschichtungen mit fehlerfreier Oberfläche und geringer Vergilbungsneigung ergibt.

Diese Aufgabe wird mit der Epoxidharz-Zusammensetzung wie in Anspruch 1 beschrieben gelöst. Sie enthält eine Kombination aus Wachs und Bis(aminomethyl)cyclohexan. Überraschenderweise ermöglicht diese Kombination sehr schnell aushärtende Beschichtungen mit fehlerfreien Oberflächen, auch bei Aushärtung in der Kälte. Dabei verfügt die erfindungsgemässe Zusammensetzung über eine sehr niedrige Viskosität, was eine hervorragende Verarbeitbarkeit ermöglicht. Sie braucht dafür keine oder nur wenig Verdünner wie Benzylalkohol und ist somit äussert emissionsarm bzw. -frei. Die ausgehärtete Beschichtung weist eine hervorragende mechanische Festigkeit auf und zeigt eine äusserst geringe Neigung zum Vergilben.

Dass die Anwesenheit des Wachses nicht nur die Beschichtungsqualität verbessert, sondern auch eine deutlich verbesserte Stabilität gegenüber Vergilbung bewirkt, ist besonders überraschend und wird mit ähnlichen Zusammensetzungen auf Basis von anderen Aminen nicht beobachtet.

Werden anstelle von Bis(aminomethyl)cyclohexan andere im Stand der Technik übliche Amine wie 1-Amino-3-aminomethyl-3,5,5-trimethylcyclohexan (IPDA), 1,3-Bis(aminomethyl)benzol (MXDA), 2,2(4),4-Trimethylhexamethylendiamin (TMD), Triethylentetramin (TETA), Tetraethylenpentamin (TEPA) oder Polyoxypropylendiamine verwendet, zeigen entsprechende Epoxidharz-Zusammensetzungen deutlich schlechtere Eigenschaften, auch wenn sie ein Wachs enthalten. Sie müssten für die Verwendung als Bodenbeschichtung mittels Zugabe von Addukten und/oder weiteren Additiven verbessert werden, was aber erfahrungsgemäss Nachteile bei andern Eigenschaften wie Verarbeitbarkeit, Geruch, Emission oder Neigung zum Vergilben zur Folge hat. IPDA, MXDA, TMD oder TETA zeigen in Kombination mit dem Wachs zwar Verbesserungen bei der Oberflächenqualität, es treten aber dennoch Blushing-bedingte Fehler auf, während Polyoxypropylendiamin unerwünscht langsam aushärtet.

Die erfindungsgemässe Epoxidharz-Zusammensetzung ermöglicht Beschichtungsprodukte, die ausgezeichnet verarbeitbar sind, sehr schnell aushärten, praktisch nicht vergilben und eine harte, glänzende Oberfläche von hoher Qualität aufweisen, auch bei Verwendung unter feuchtkalten Bedingungen wie beispielsweise 8°C und 80% relative Feuchte. Diese Produkte sind damit ganz besonders geeignet als Bodenbeschichtung, insbesondere als Deckbelag (Top Coat) bzw. Versiegelung, wo geringe Emission zusammen mit hohen Anforderungen an die Verarbeitbarkeit und die Ästhetik wichtig sind.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine Epoxidharz-Zusammensetzung umfassend mindestens ein Epoxid-Flüssigharz, Bis(aminomethyl)cyclohexan und mindestens ein Wachs.

Als "Epoxid-Flüssigharz" wird ein technisches Polyepoxid mit einer Glasübergangstemperatur unterhalb von 25°C bezeichnet.

Als "Wachs" wird eine hydrophobe, nicht mit Wasser mischbare, bei Raumtemperatur feste, aber knetbare Masse bezeichnet, die bei einer Temperatur oberhalb von 40°C, insbesondere oberhalb von 50°C, ohne Zersetzung zu einer relativ niedrigviskosen Flüssigkeit schmilzt.

Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.

Als "Aminwasserstoff" werden die Wasserstoffatome von primären und sekundären Aminogruppen bezeichnet.

Als "Aminwasserstoff-Equivalentgewicht" wird die Masse eines Amins oder einer Amin-haltigen Zusammensetzung, die ein Molequivalent Aminwasserstoff enthält, bezeichnet.

Mit "Poly" beginnende Substanznamen wie Polyamin, Polyol oder Polyepoxid bezeichnen Substanzen, die formal zwei oder mehr der in ihrem Namen vorkommenden funktionellen Gruppen pro Molekül enthalten.

Als "Verdünner" wird eine in einem Epoxidharz lösliche und dessen Viskosität senkende Substanz bezeichnet, welche bei der Aushärtung chemisch nicht in das Epoxid-Polymer eingebunden wird.

Als "Viskosität" wird die dynamische Viskosität oder Scherviskosität bezeichnet, welche durch das Verhältnis zwischen der Schubspannung und der Scherrate (Geschwindigkeitsgefälle) definiert ist und wie in der Beschreibung bzw. den Ausführungsbeispielen beschrieben bestimmt wird.

Als "Molekulargewicht" wird die molare Masse (in Gramm pro Mol) eines Moleküls bezeichnet. Als "mittleres Molekulargewicht" wird das Zahlenmittel Mₙ einer polydispersen Mischung von oligomeren oder polymeren Molekülen bezeichnet, welches üblicherweise mittels Gelpermeationschromatographie (GPC) gegen Polystyrol als Standard bestimmt wird.

Als "Raumtemperatur" wird eine Temperatur von 23°C bezeichnet.

Ein geeignetes Epoxid-Flüssigharz wird auf bekannte Art und Weise erhalten, insbesondere aus der Oxidation der entsprechenden Olefine oder aus der Reaktion von Epichlorhydrin mit den entsprechenden Polyolen, Polyphenolen oder Aminen.

Geeignete Epoxid-Flüssigharze sind insbesondere aromatische Epoxidharze, insbesondere die Glycidylether von:
- Bisphenol-A, Bisphenol-F oder Bisphenol-A/F, wobei A für Aceton und F für Formaldehyd steht, welche als Edukte zur Herstellung dieser Bisphenole dienten. Im Fall von Bisphenol-F können auch Stellungsisomere vorhanden sein, insbesondere abgeleitet von 2,4'- oder 2,2'-Hydroxyphenylmethan.
- Dihydroxybenzol-Derivaten wie Resorcin, Hydrochinon oder Brenzkatechin;
- weiteren Bisphenolen oder Polyphenolen wie Bis(4-hydroxy-3-methylphenyl)methan, 2,2-Bis(4-hydroxy-3-methylphenyl)propan (Bisphenol-C), Bis(3,5-dimethyl-4-hydroxyphenyl)methan, 2,2-Bis(3,5-dimethyl-4-hydroxyphenyl)propan, 2,2-Bis(3,5-dibromo-4-hydroxyphenyl)propan, 2,2-Bis(4-hydroxy-3-tert.butylphenyl)propan, 2,2-Bis(4-hydroxyphenyl)butan (Bisphenol-B), 3,3-Bis(4-hydroxyphenyl)pentan, 3,4-Bis(4-hydroxyphenyl)hexan, 4,4-Bis(4-hydroxyphenyl)heptan, 2,4-Bis(4-hydroxyphenyl)-2-methylbutan, 2,4-Bis(3,5-dimethyl-4-hydroxyphenyl)-2-methylbutan, 1,1-Bis(4-hydroxyphenyl)-cyclohexan (Bisphenol-Z), 1,1-Bis(4-hydroxyphenyl)-3,3,5-trimethylcyclohexan (Bisphenol-TMC), 1,1-Bis(4-hydroxyphenyl)-1-phenylethan, 1,4-Bis[2-(4-hydroxyphenyl)-2-propyl]benzol (Bisphenol-P), 1,3-Bis[2-(4-hydroxyphenyl)-2-propyl]benzol (Bisphenol-M), 4,4'-Dihydroxydiphenyl (DOD), 4,4'-Dihydroxybenzophenon, Bis(2-hydroxynaphth-1-yl)methan, Bis(4-hydroxynaphth-1-yl)methan, 1,5-Dihydroxynaphthalin, Tris(4-hydroxyphenyl)methan, 1,1,2,2-Tetrakis(4-hydroxyphenyl)ethan, Bis(4-hydroxyphenyl)ether oder Bis(4-hydroxyphenyl)sulfon;
- Kondensationsprodukten von Phenolen mit Formaldehyd, die unter sauren Bedingungen erhalten werden, wie Phenol-Novolaken oder Kresol-Novolaken, auch Bisphenol-F-Novolake genannt;
- aromatischen Aminen, wie Anilin, Toluidin, 4-Aminophenol, 4,4'-Methylendiphenyldiamin, 4,4'-Methylendiphenyldi-(N-methyl)amin, 4,4'-[1,4-Phenylen-bis(1-methylethyliden)]bisanilin (Bisanilin-P) oder 4,4'-[1,3-Phenylen-bis(1-methylethyliden)]bisanilin (Bisanilin-M).

Weitere geeignete Epoxid-Flüssigharze sind aliphatische oder cycloaliphatische Polyepoxide, insbesondere
- Glycidylether von gesättigten oder ungesättigten, verzweigten oder unverzweigten, zyklischen oder offenkettigen di-, tri- oder tetrafunktionellen C₂- bis C₃₀-Alkoholen, insbesondere Ethylenglykol, Propylenglykol, Butylenglykol, Hexandiol, Octandiol, Polypropylenglykolen, Dimethylolcyclohexan, Neopentylglykol, Dibromoneopentylglykol, Rizinusöl, Trimethylolpropan, Trimethylolethan, Pentaerythrol, Sorbit oder Glycerin, oder alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat oder Triglycidylisocyanurat, oder Umsetzungsprodukte von Epichlorhydrin mit Hydantoin.
- Epoxidharze aus der Oxidation von Olefinen, wie insbesondere Vinylcylohexen, Dicyclopentadien, Cyclohexadien, Cyclododecadien, Cyclododecatrien, Isopren, 1,5-Hexadien, Butadien, Polybutadien oder Divinylbenzol.

Als Epoxid-Flüssigharz bevorzugt ist ein Flüssigharz auf der Basis eines Bisphenols, insbesondere ein Bisphenol-A Diglycidylether und/oder Bisphenol-F-Diglycidylether, wie sie kommerziell beispielsweise von Dow, Huntsman oder Momentive erhältlich sind. Diese Flüssigharze weisen eine für Epoxidharze niedrige Viskosität und im ausgehärteten Zustand gute Eigenschaften als Beschichtung auf. Sie können Anteile von Bisphenol A-Festharz oder Novolak-Glycidylethern enthalten.

Als Bis(aminomethyl)cyclohexan geeignet ist 1,2-Bis(aminomethyl)cyclohexan, 1,3-Bis(aminomethyl)cyclohexan oder 1,4-Bis(aminomethyl)cyclohexan oder Mischungen davon.

Bevorzugt ist 1,3-Bis(aminomethyl)cyclohexan oder 1,4-Bis(aminomethyl)cyclohexan oder Mischungen davon.

Besonders bevorzugt ist 1,3-Bis(aminomethyl)cyclohexan. Es wird insbesondere hergestellt aus 1,3-Bis(aminomethyl)benzol (MXDA) mittels Hydrierung und ist kommerziell erhältlich, beispielsweise von Mitsubishi Gas Chemical.

Das Wachs ist insbesondere ein natürliches Wachs wie Bienenwachs oder Montanwachs, ein aus Pflanzenöl durch Härtung mittels Hydrierung gewonnenes Wachs wie Sojawachs, Rapswachs oder Rizinuswachs, ein aus Erdöl gewonnenes Wachs wie insbesondere ein Paraffinwachs, ein synthetisches Wachs wie insbesondere ein Polyethylenwachs, ein Amidwachs (Distearylethylendiamid), oder eine Mischung solcher Wachse.

Das Wachs ist bevorzugt ausgewählt aus der Gruppe bestehend aus Bienenwachs, Montanwachs, Sojawachs, Rapswachs, Rizinuswachs, Paraffinwachs, Polyethylenwachs, Distearylethylendiamid und Mischungen dieser Wachse.

Das Wachs enthält bevorzugt langkettige Fettsäureester und/oder langkettige Kohlenwasserstoffe, bevorzugt mit einem Molekulargewicht im Bereich von 250 bis 1'000 g/mol, insbesondere 250 bis 500 g/mol.

Besonders bevorzugt ist das Wachs ein Paraffinwachs, insbesondere ein Paraffinwachs enthaltend lineare oder verzweigte gesättigte Kohlenwasserstoffe mit einem Molekulargewicht im Bereich von 250 bis 500 g/mol.

Das Wachs liegt bevorzugt als Dispersion in einem nichtwässrigen Medium vor. Das nichtwässrige Medium ist insbesondere bei Raumtemperatur flüssig. Bevorzugt ist das nichtwässrige Medium schwerflüchtig und weist einen Siedepunkt von mindestens 250°C und einen Dampfdruck von höchstens 0.01 kPa bei einer Temperatur von 20°C auf.

Eine solche Wachs-Dispersion ist bevorzugt bei Raumtemperatur lagerstabil.

Das nichtwässrige Medium ist bevorzugt mit Epoxidharz-Zusammensetzungen auf Basis von Bisphenol-A- oder -F-Diglycidylethern gut verträglich.

Bevorzugt enthält das nichtwässrige Medium selber Epoxidgruppen. Dadurch wird es bei der Aushärtung der Zusammensetzung eingebaut und verursacht keine Emissionen oder Migration.

Als nichtwässriges Medium bevorzugt ist eine Verbindung ausgewählt aus der Gruppe bestehend aus Bisphenol-A-Diglycidylether, Bisphenol-F-Diglycidylether, Bisphenol-A/F-Diglycidylether, Dipropylenglykoldiglycidylether, Tripropylenglykoldiglycidylether, Diglycidylether von Polypropylenglykolen, 1,4-Butandioldiglycidylether, 1,6-Hexandioldiglycidylether, Dimethylolcyclohexandiglycidylether, Kresylglycidylether, 4-Methoxyphenylglycidylether, p-n-Butylphenylglycidylether, p-tert.Butylphenylglycidylether, 4-Nonylphenylglycidylether, 4-Dodecylphenylglycidylether, Cardanolglycidylether, Benzylglycidylether, 2-Ethylhexylglycidylether, Glycidylether von natürlichen Alkoholen, insbesondere C₈-bis C₁₀-, C₁₂- bis C₁₄- oder C₁₃- bis C₁₅-Alkylglycidylether, und Kombinationen der genannten Verbindungen.

Besonders bevorzugt als nichtwässriges Medium ist eine Mischung aus Bisphenol-A-, -F- oder -A/F-Diglycidylether und Glycidylether von natürlichen Alkoholen, insbesondere C₈- bis C₁₀-, C₁₂- bis C₁₄- oder C₁₃- bis C₁₅-Alkylglycidylether.

Bevorzugt ist das Wachs ein Paraffinwachs, welches dispergiert in einer Mischung aus Bisphenol-A-, -F- oder -A/F-Diglycidylether und Alkylglycidylether, insbesondere C₈- bis C₁₀-, C₁₂- bis C₁₄- oder C₁₃- bis C₁₅-Alkylglycidylether, vorliegt.

Bevorzugt enthält eine solche Wachs-Dispersion 40 bis 75 Gewichts-% Paraffinwachs, 10 bis 30 Gewichts-% Bisphenol-A-, -F- oder -A/F-Diglycidylether und 10 bis 30 Gewichts-% Alkylglycidylether.

Zusätzlich kann eine solche Wachs-Dispersion weitere Hilfs- und Zusatzstoffe enthalten, insbesondere Emulgatoren, Stabilisatoren oder Verdicker.

Das im nichtwässrigen Medium dispergierte Wachs hat bevorzugt eine Teilchengrösse im Bereich von 1 bis 500 µm, insbesondere 10 bis 100 µm. Bevorzugt liegt die mittlere Teilchengrösse im Bereich von 20 bis 60 µm.

Die bevorzugten Ausführungsformen des Wachses lassen sich besonders gut in ein Epoxid-Flüssigharz einmischen, wo sie bei Raumtemperatur weiterhin lagerstabil sind, und sie vermögen bei der Verwendung der Epoxidharz-Zusammensetzung als flächige Beschichtung das Ausbilden einer fehlerfreien Oberfläche besonders gut zu unterstützen.

Bevorzugt enthält die Epoxidharz-Zusammensetzung 0.1 bis 10, besonders bevorzugt 0.2 bis 5, insbesondere 0.2 bis 2, Gewichtsteile Wachs bezogen auf 100 Gewichtsteile Epoxidgruppen-haltige Bestandteile der Zusammensetzung.

Die Epoxidharz-Zusammensetzung kann zusätzlich weitere Bestandteile enthalten.

Bevorzugt enthält sie mindestens einen weiteren Bestandteil ausgewählt aus Epoxidgruppen-haltigen Reaktivverdünnern, weiteren Polyaminen, Beschleunigern, Verdünnern und Füllstoffen.

Bevorzugte Epoxidgruppen-haltige Reaktivverdünner sind insbesondere Glycidylether von ein- oder mehrwertigen Phenolen oder aliphatischen oder cycloaliphatischen Alkoholen, wie insbesondere die bereits genannten Glycidylether von zwei oder merhwertigen Alkoholen, oder Monoglycidylether wie insbesondere Phenylglycidylether, Kresylglycidylether, Guaiacolglycidylether, 4-Methoxyphenylglycidylether, p-n-Butylphenylglycidylether, p-tert.Butylphenylglycidylether, 4-Nonylphenylglycidylether, 4-Dodecylphenylglycidylether, Cardanolglycidylether, Benzylglycidylether, Allylglycidylether, Butylglycidylether, Hexylglycidylether, 2-Ethylhexylglycidylether, oder Glycidylether von natürlichen Alkoholen wie insbesondere C₈- bis C₁₀- oder C₁₂- bis C₁₄- oder C₁₃- bis C₁₅-Alkylglycidylether. Die Zugabe eines Epoxidgruppen-haltigen Reaktivverdünners bewirkt eine Reduktion der Viskosität und/oder der Glasübergangstemperatur und/oder der mechanischen Werte.

Geeignete weitere Polyamine sind insbesondere - aliphatische, cycloaliphatische oder arylaliphatische primäre Di- oder Triamine, insbesondere 2,2-Dimethyl-1,3-propandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2(4),4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- oder 1,4-Diaminocyclohexan, Bis(4-aminocyclohexyl)methan, Bis(4-amino-3-methylcyclohexyl)methan, Bis(4-amino-3-ethylcyclohexyl)methan, Bis(4-amino-3,5-dimethylcyclohexyl)methan, Bis(4-amino-3-ethyl-5-methylcyclohexyl)methan, 1-Amino-3-aminomethyl-3,5,5-trimethylcyclohexan (Isophorondiamin oder IPDA), 2(4)-Methyl-1,3-diaminocyclohexan, 2,5(2,6)-Bis(aminomethyl)bicyclo[2.2.1]heptan (NBDA), 3(4),8(9)-Bis(aminomethyl)tricyclo[5.2.1.0^{2,6}]decan, 1,4-Diamino-2,2,6-trimethylcyclohexan (TMCDA), 1,8-Menthandiamin, 3,9-Bis(3-aminopropyl)-2,4,8,10-tetraoxaspiro[5.5]undecan, 1,3-Bis(aminomethyl)benzol (MXDA) oder 1,4-Bis(aminomethyl)benzol,
- Ethergruppen-haltige aliphatische primäre Di- oder Triamine, insbesondere Bis(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin oder höhere Oligomere dieser Diamine, Bis(3-aminopropyl)polytetrahydrofurane oder andere Polytetrahydrofurandiamine, cycloaliphatische Ethergruppen-haltige Diamine aus der Propoxylierung und nachfolgenden Aminierung von 1,4-Dimethylolcyclohexan, erhältlich insbesondere als Jeffamine^{®} RFD-270 (von Huntsman), oder Polyoxyalkylendi- oder -triamine, insbesondere Jeffamine^{®} D-230, Jeffamine^{®} D-400, Jeffamine^{®} D-2000, Jeffamine^{®} EDR-104, Jeffamine^{®} EDR-148, Jeffamine^{®} EDR-176, Jeffamine^{®} T-403, Jeffamine^{®} T-3000, Jeffamine^{®} T-5000 (alle von Huntsman), oder entsprechende Amine von BASF oder Nitroil;
- sekundäre Aminogruppen aufweisende Polyamine, wie insbesondere 2-Aminoethylpiperazin, 3-Dimethylaminopropylamin (DMAPA), 3-(3-(Dimethylamino)propylamino)propylamin (DMAPAPA), Bis(hexamethylen)triamin (BHMT), Diethylentriamin (DETA), Triethylentetramin (TETA), Tetraethylenpentamin (TEPA), Pentaethylenhexamin (PEHA) oder höhere Homologe linearer Polyethylenamine, Dipropylentriamin (DPTA), N-(2-Aminoethyl)-1,3-propandiamin (N3-Amin), N,N'-Bis(3-aminopropyl)ethylendiamin (N4-Amin), N,N'-Bis(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin, N,N'-Bis(3-amino-1-ethylpropyl)-2-methyl-1 ,5-pentandiamin, Produkte aus der reduktiven Alkylierung von primären Polyaminen mit Aldehyden oder Ketonen, insbesondere N-Benzyl-1,2-ethandiamin, N,N'-Dibenzyl-1,2-ethandiamin, N-Benzyl-1,2-propandiamin, N-Benzyl-1,3-bis-(aminomethyl)benzol, N,N'-Dibenzyl-1,3-bis(aminomethyl)benzol, N-2-Ethylhexyl-1,3-bis(aminomethyl)benzol, N,N'-Bis(2-ethylhexyl)-1,3-bis(aminomethyl)benzol, N-Benzyldiethylentriamin, N,N'-Dibenzyldiethylentriamin, N-Benzyltriethylentetramin, N,N'-Dibenzyltriethylentetramin, N"-Benzyl-N,N'-bis(3-aminopropyl)ethylendiamin, N",N"'-Dibenzyl-N,N'-bis(3-aminopropyl)-ethylendiamin, oder partiell styrolisierte Polyamine wie zum Beispiel styrolisiertes MXDA enthaltend N-Phenylethyl-1,3-bis(aminomethyl)benzol (erhältlich als Gaskamine^{®} 240 von Mitsubishi Gas Chemical);
- Addukte von Bis(aminomethyl)cyclohexan oder der obengenannten oder weiterer Polyamine mit Epoxiden oder Epoxidharzen, insbesondere Addukte mit Diepoxiden oder Monoepoxiden;
- Polyamidoamine, insbesondere Umsetzungsprodukte aus einer ein- oder mehrwertigen Carbonsäure, beziehungsweise deren Ester oder Anhydride, insbesondere einer Dimerfettsäure, mit einem im stöchiometrischen Überschuss eingesetzten aliphatischen, cycloaliphatischen oder aromatischen Polyamin, insbesondere einem Polyalkylenamin wie beispielsweise DETA oder TETA; oder
- Mannich-Basen, insbesondere Phenalkamine, also Umsetzungsprodukte von Phenolen, insbesondere Cardanol, mit Aldehyden, insbesondere Formaldehyd, und Polyaminen.

Bevorzugte weitere Polyamine sind ausgewählt aus der Gruppe bestehend aus TMD, 1,2-, 1,3- oder 1,4-Diaminocyclohexan, Bis(4-aminocyclohexyl)methan, IPDA, 2(4)-Methyl-1,3-diaminocyclohexan, MXDA, 1,4-Bis(aminomethyl)benzol, Polyoxypropylendiamine mit einem mittlerem Molekulargewicht im Bereich von 200 bis 500 g/mol, N-Benzyl-1,2-ethandiamin, N,N'-Dibenzyl-1,2-ethandiamin, N-Benzyl-1,2-propandiamin, N-Benzyl-1,3-bis(aminomethyl)benzol, N,N'-Dibenzyl-1,3-bis(aminomethyl)benzol, N"-Benzyl-N,N'-bis(3-aminopropyl)ethylendiamin, N",N"'-Dibenzyl-N,N'-bis(3-aminopropyl)ethylendiamin und Addukte dieser oder weiterer Polyamine mit Mono- oder Diepoxiden.

In einer bevorzugten Ausführungsform enthält die Epoxidharz-Zusammensetzung als weiteres Polyamin N-Benzyl-1,2-ethandiamin, gegebenenfalls in Kombination mit N,N'-Dibenzyl-1,2-ethandiamin. Dabei liegt der Gehalt an N-Benzyl-1,2-ethandiamin bezogen auf die Summe der Amine bevorzugt im Bereich von 1 bis 50 Gewichts-%, bevorzugt 2 bis 30 Gewichts-%, insbesondere 5 bis 25 Gewichts-%. Eine solche Zusammensetzung ermöglicht Beschichtungen mit einer besonders hohen Schlagfestigkeit.

Geeignete Beschleuniger sind Substanzen, welche die Reaktion zwischen Aminogruppen und Epoxidgruppen beschleunigen, insbesondere Säuren oder zu Säuren hydrolysierbare Verbindungen, insbesondere organische Carbonsäuren wie Essigsäure, Benzoesäure, Salicylsäure, 2-Nitrobenzoesäure, Milchsäure, organische Sulfonsäuren wie Methansulfonsäure, p-Toluolsulfonsäure oder 4-Dodecylbenzolsulfonsäure, Sulfonsäureester, andere organische oder anorganische Säuren wie insbesondere Phosphorsäure, oder Mischungen der vorgenannten Säuren oder Säureester, tertiäre Amine wie insbesondere 1,4-Di-azabicyclo[2.2.2]octan, Benzyldimethylamin, α-Methylbenzyldimethylamin, Triethanolamin, N,N-Dimethylaminopropylamin, Imidazole wie insbesondere N-Methylimidazol, N-Vinylimidazol oder 1,2-Dimethylimidazol, Salze solcher tertiärer Amine, quaternäre Ammoniumsalze, insbesondere Benzyltrimethylammoniumchlorid, Amidine wie insbesondere 1,8-Diazabicyclo[5.4.0]undec-7-en, Guanidine wie insbesondere 1,1,3,3-Tetramethylguanidin, Phenole wie insbesondere Bisphenole, Phenol-Harze oder Mannich-Basen, insbesondere 2-(Dimethylaminomethyl)phenol, 2,4,6-Tris(dimethylaminomethyl)phenol oder Polymere aus Phenol, Formaldehyd und N,N-Dimethyl-1,3-propandiamin, Phosphite, insbesondere Di- oder Triphenylphosphite, Nitrate wie insbesondere Calciumnitrat, oder Mercaptogruppen aufweisende Verbindungen.

Bevorzugt sind Säuren, tertiäre Amine, Nitrate oder Mannich-Basen. Besonders bevorzugt sind Salicylsäure, 2,4,6-Tris(dimethylaminomethyl)phenol oder Calciumnitrat oder eine Kombination davon.

Geeignete Verdünner sind insbesondere 2-Phenoxyethanol, 2-Benzyloxyethanol, Benzylalkohol, Ethylenglykol, Ethylenglykoldimethylether, Ethylenglykoldiethylether, Ethylenglykoldibutylether, Ethylenglykoldiphenylether, Diethylenglykol, Diethylenglykolmonomethylether, Diethylenglykolmonoethylether, Diethylenglykolmono-n-butylether, Diethylenglykoldimethylether, Diethylenglykoldiethylether, Diethylenglykoldi-n-butylylether, Propylenglykolbutylether, Propylenglykolphenylether, Dipropylenglykol, Dipropylenglykolmonomethylether, Dipropylenglykoldimethylether, Dipropylenglykoldi-n-butylether, Diphenylmethan, Diisopropylnaphthalin, Erdölfraktionen wie zum Beispiel Solvesso^{®}-Typen (von Exxon), Alkylphenole wie tert.Butylphenol, Nonylphenol, Dodecylphenol, Cardanol (aus Cashewschalen-Öl, enthaltend als Hauptbestandteil 3-(8,11,14-Pentadecatrienyl)phenol), styrolisiertes Phenol, Bisphenole, aromatische Kohlenwasserstoffharze, insbesondere Phenolgruppen-haltige Typen, alkoxyliertes Phenol, insbesondere ethoxyliertes oder propoxyliertes Phenol, insbesondere 2-Phenoxyethanol, Adipate, Sebacate, Phthalate, Benzoate, organische Phosphor- oder Sulfonsäureester oder Sulfonamide.

Bevorzugte Verdünner sind Benzylalkohol, 2-Phenoxyethanol, Cardanol, styrolisiertes Phenol, Diisopropylnaphthalin oder phenolgruppenhaltige aromatische Kohlenwasserstoffharze. Besonders bevorzugt ist Benzylalkohol, Diisopropylnaphthalin oder Cardanol, insbesondere Benzylalkohol.

Bevorzugt liegt der Gehalt an Verdünnern in der Epoxidharz-Zusammensetzung im Bereich von 0 bis 20 Gewichts-%, besonders bevorzugt 0 bis 15 Gewichts-%, insbesondere 0 bis 10 Gewichts-%. Solche Zusammensetzungen sind besonders emissionsarm.

In einer bevorzugten Ausführungsform enthält die Epoxidharz-Zusammensetzung 1 bis 15 Gewichts-%, insbesondere 2 bis 10 Gewichts-%, Verdünner, insbesondere Benzylalkohol. Eine solche Zusammensetzung ermöglicht emissionsarme Beschichtungen, welche über eine hohe Schlagfestigkeit und Härte verfügen.

Geeignete Füllstoffe sind insbesondere gemahlenes oder gefälltes Calciumcarbonat, welches gegebenenfalls mit Fettsäure, insbesondere Stearaten, beschichtet ist, Baryt (Schwerspat), Talk, Quarzmehl, Quarzsand, Siliciumcarbid, Eisenglimmer, Dolomit, Wollastonit, Kaolin, Mica (Kalium-Aluminium-Silikat), Molekularsieb, Aluminiumoxid, Aluminiumhydroxid, Magnesiumhydroxid, Kieselsäure, Zement, Gips, Flugasche, Russ, Graphit, Metall-Pulver wie Aluminium, Kupfer, Eisen, Zink, Silber oder Stahl, PVC-Pulver oder Hohlkugeln. Bevorzugt ist Calciumcarbonat, Quarzmehl und Quarzsand.

Gegebenenfalls enthält die Epoxidharz-Zusammensetzung weitere Hilfs- und Zusatzstoffe, insbesondere die Folgenden:
- Reaktivverdünner, insbesondere die bereits vorgängig erwähnten, oder epoxidiertes Sojaöl oder Leinöl, Acetoacetatgruppen aufweisende Verbindungen, insbesondere acetoacetylierte Polyole, Butyrolakton, Carbonate, Aldehyde, Isocyanate oder Reaktivgruppen-aufweisende Silikone;
- weitere Amine, insbesondere Monoamine wie insbesondere Benzylamin oder Furfurylamin oder aromatische Polyamine wie insbesondere 4,4'-, 2,4' und/oder 2,2'-Diaminodiphenylmethan, 2,4- und/oder 2,6-Toluylendiamin, 3,5-Dimethylthio-2,4- und/oder -2,6-toluylendiamin, 3,5-Diethyl-2,4- und/oder -2,6-toluylendiamin;
- Mercaptogruppen aufweisende Verbindungen, insbesondere flüssige Mercaptan-terminierte Polysulfidpolymere, Mercaptan-terminierte Polyoxyalkylenether, Mercaptan-terminierte Polyoxyalkylen-Derivate, Polyester von Thiocarbonsäuren, 2,4,6-Trimercapto-1,3,5-triazin, Triethylenglykoldimercaptan oder Ethandithiol;
- Polymere, insbesondere Polyamide, Polysulfide, Polyvinylformal (PVF), Polyvinylbutyral (PVB), Polyurethane (PUR), Polymere mit Carboxylgruppen, Polyamide, Butadien-Acrylnitril-Copolymere, Styrol-Acrylnitril-Copolymere, Butadien-Styrol-Copolymere, Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere chlorsulfonierte Polyethylene oder Fluor-haltige Polymere oder Sulfonamid-modifizierte Melamine;
- Fasern, insbesondere Glasfasern, Kohlefasern, Metallfasern, Keramikfasern oder Kunststofffasern wie Polyamidfasern oder Polyethylenfasern;
- Pigmente, insbesondere Titandioxid, Eisenoxide oder Chrom(III)oxid;
- Rheologie-Modifizierer, insbesondere Verdicker oder Antiabsetzmittel;
- Haftverbesserer, insbesondere Organoalkoxysilane;
- flammhemmende Substanzen, insbesondere die bereits genannten Füllstoffe Aluminiumhydroxid oder Magnesiumhydroxid, Antimontrioxid, Antimonpentoxid, Borsäure (B(OH)₃), Zinkborat, Zinkphosphat, Melaminborat, Melamincyanurat, Ammoniumpolyphosphat, Melaminphosphat, Melaminpyrophosphat, polybromierte Diphenyloxide oder Diphenylether, Phosphate wie insbesondere Diphenylkresylphosphat, Resorcinol-bis(diphenylphosphat), Resorcinoldiphosphat-Oligomer, Tetraphenylresorcinoldiphosphit, Ethylendiamindiphosphat, Bisphenol-A-bis(diphenylphosphat), Tris(chloroethyl)phosphat, Tris(chloropropyl)phosphat, Tris(dichloroisopropyl)phosphat, Tris[3-bromo-2,2-bis(bromomethyl)propyl]phosphat, Tetrabromo-Bisphenol-A, Bis-(2,3-dibromopropylether) von Bisphenol A, bromierte Epoxidharze, Ethylen-bis(tetrabromophthalimid), Ethylen-bis(dibromonorbornandicarboximid), 1,2-Bis(tribromophenoxy)ethan, Tris(2,3-dibromopropyl)isocyanurat, Tribromophenol, Hexabromocyclododecan, Bis(hexachlorocyclopentadieno)cyclooctan oder Chlorparaffine; oder
- Additive, insbesondere Netzmittel, Verlaufmittel, Entschäumer, Entlüfter, Stabilisatoren gegen Oxidation, Wärme, Licht oder UV-Strahlung oder Biozide.

Für den Fall, dass die Epoxidharz-Zusammensetzung zusätzlich zu Bis(aminomethyl)cyclohexan weitere Polyamine enthält, liegt der Gehalt an Bis(aminomethyl)cyclohexan bezogen auf die Summe der Amine bevorzugt mindestens bei 35 Gewichts-%, besonders bevorzugt mindestens bei 50 Gewichts-%, insbesondere mindestens bei 70 Gewichts-%, am meisten bevorzugt mindestens bei 85 Gewichts-%. Eine solche Epoxidharz-Zusammensetzung verfügt besonders ausgeprägt über die beschriebenen bevorzugten Eigenschaften.

Die Epoxidharz-Zusammenetzung ist bevorzugt weitgehend frei von Aminen mit einem Molekulargewicht unterhalb von 120 g/mol, insbesondere unterhalb von 150 g/mol. Bevorzugt enthält sie bezogen auf die Summe der Amine weniger als 2 Gewichts-%, insbesondere weniger als 1 Gewichts-%, Amine mit einem Molekulargewicht unterhalb von 120 g/mol, insbesondere unterhalb von 150 g/mol. Eine solche Zusammenetzung ist toxikologisch und geruchlich besonders vorteilhaft und ermöglicht besonders schöne Oberflächen.

Bevorzugt enthält die Epoxidharz-Zusammensetzung nur einen geringen Gehalt an Amin-Epoxid-Addukten. Bevorzugt enthält sie bezogen auf die Summe der Amine weniger als 30 Gewichts-%, besonders bevorzugt weniger als 20 Gewichts-%, insbesondere weniger als 10 Gewichts-%, Amin-Epoxid-Addukte. Eine solche Zusammensetzung ist auch ohne Verdünner besonders niedrigviskos.

Bevorzugt enthält die Epoxidharz-Zusammensetzung nur einen geringen Gehalt an hochsiedenen Verdünnern. Bevorzugt enthält sie weniger als 30 Gewichts-%, besonders bevorzugt weniger als 20 Gewichts-%, insbesondere weniger als 15 Gewichts-%, am meisten bevorzugt weniger als 10 Gewichts-%, Verdünner mit einem Siedepunkt von mindestens 200°C.

Bevorzugt enthält die Epoxidharz-Zusammensetzung weniger als 5 Gewichts-%, besonders bevorzugt weniger als 2 Gewichts-%, insbesondere weniger als 1 Gewichts-%, am meisten bevorzugt gar keine, Verdünner mit einem Siedepunkt unterhalb von 200°C. Eine solche Zusammensetzung ist besonders emissionsarm.

In der Epoxidharz-Zusammensetzung liegt das Verhältnis der Anzahl von gegenüber Epoxidgruppen reaktiven Gruppen gegenüber der Anzahl Epoxidgruppen bevorzugt im Bereich von 0.5 bis 1.5, insbesondere 0.7 bis 1.2.

Die in der Epoxidharz-Zusammensetzung vorhandenen Aminwasserstoffe und gegebenenfalls vorhandene weitere gegenüber Epoxidgruppen reaktive Gruppen reagieren mit den Epoxidgruppen unter deren Ringöffnung (Additionsreaktion). Als Ergebnis hauptsächlich dieser Reaktion polymerisiert die Zusammensetzung und härtet dadurch aus.

Die Epoxidharz-Zusammensetzung liegt bevorzugt in Form einer zwei- oder mehrkomponentigen Zusammensetzung vor und umfasst
- eine Harz-Komponente, welche mindestens ein Epoxid-Flüssigharz und gegebenenfalls weitere Epoxidgruppen aufweisende Verbindungen enthält, und
- eine Härter-Komponente, welche Bis(aminomethyl)cyclohexan und gegebenenfalls weitere Polyamine oder Härter enthält,
wobei das Wachs als Bestandteil der Harz-Komponente oder der Härter-Komponente oder von beiden Komponenten vorliegt.

Weitere in der Epoxidharz-Zusammensetzung enthaltende Bestandteile, wie Verdünner, Beschleuniger, Füllstoffe oder Additive wie Netzmittel oder Entlüfter, können in der Harz- oder der Härter-Komponente oder in beiden Komponenten vorhanden sein.

Für den Fall, dass das Wachs als Dispersion in einem nichtwässrigen Medium, welches selber Epoxidgruppen aufweist, vorliegt, ist es bevorzugt ein Bestandteil der Harz-Komponente.

Die Harz- und die Härter-Komponente der Epoxidharz-Zusammensetzung werden jeweils in einem eigenen Gebinde gelagert. Weitere Bestandteile der Epoxidharz-Zusammensetzung können als Bestandteil der Harz- oder der Härter-Komponente vorhanden sein. Ebenfalls möglich ist, dass weitere Bestandteile als eigene, weitere Komponente vorhanden sind.

Die Komponenten sind lagerfähig, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern.

Zur Anwendung der Epoxidharz-Zusammensetzung werden die Komponenten kurz vor oder während der Applikation miteinander vermischt.

Die Vermischung der Komponenten erfolgt mittels eines geeigneten Verfahrens; sie kann kontinuierlich oder batchweise erfolgen. Die Vermischung erfolgt insbesondere bei Umgebungstemperatur, welche typischerweise im Bereich von 5 bis 50°C, bevorzugt 10 bis 30°C, liegt.

Mit der Vermischung der beiden Komponenten beginnt die Aushärtung durch chemische Reaktion. Dabei reagieren die in der Epoxidharz-Zusammensetzung vorhandenen Aminwasserstoffe und gegebenenfalls vorhandene weitere gegenüber Epoxidgruppen reaktive Gruppen mit den Epoxidgruppen, wie vorgängig beschrieben.

Die Aushärtung erfolgt typischerweise bei einer Temperatur im Bereich von 0 bis 50°C. Bevorzugt erfolgt sie bei Umgebungstemperatur, insbesondere bei 5 bis 40°C, bevorzugt 10 bis 30°C, und erstreckt sich typischerweise über einige Tage bis Wochen. Die Dauer hängt unter anderem von der Temperatur, der Reaktivität der Bestandteile und deren Stöchiometrie sowie der Gegenwart von Beschleunigern ab.

Ein weiterer Gegenstand der Erfindung ist somit eine ausgehärtete Zusammensetzung erhalten aus der Aushärtung der Epoxidharz-Zusammensetzung wie im vorliegenden Dokument beschrieben.

Die Applikation der Epoxidharz-Zusammensetzung erfolgt auf mindestens ein Substrat, wobei die Folgenden besonders geeignet sind:
- Glas, Glaskeramik, Beton, Mörtel, Backstein, Ziegel, Gips, Asphalt oder Natursteine wie Granit oder Marmor;
- Metalle oder Legierungen wie Aluminium, Eisen, Stahl oder Buntmetalle, oder oberflächenveredelte Metalle oder Legierungen wie verzinkte oder verchromte Metalle;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe, insbesondere Hart- oder Weich-PVC, ABS, Polycarbonat (PC), Polyamid (PA), Polyester, PMMA, Epoxidharze, PUR, POM, PO, PE, PP, EPM oder EPDM, wobei die Kunststoffe gegebenenfalls mittels Plasma, Corona oder Flammen oberflächenbehandelt sind;
- Faserverstärkte Kunststoffe, wie Kohlefaser-verstärkte Kunststoffe (CFK), Glasfaser-verstärkte Kunststoffe (GFK) oder Sheet Moulding Compounds (SMC);
- beschichtete Substrate, wie pulverbeschichtete Metalle oder Legierungen;
- Farben oder Lacke.

Die Substrate können bei Bedarf vor dem Applizieren der Epoxidharz-Zusammensetzung vorbehandelt werden.

Die beschriebene Epoxidharz-Zusammensetzung ist vorteilhaft verwendbar als Belag, Beschichtung, Anstrich, Lack, Versiegelung, Grundierung oder Primer für Bau- und Industrieanwendungen, insbesondere als Bodenbelag oder Bodenbeschichtung für Innenräume wie Büros, Industriehallen, Turnhallen oder Kühlräume, oder im Aussenbereich für Balkone, Terrassen, Parkdecks, Brücken oder Dächer, als Schutzbeschichtung für Beton, Zement, Metalle, Kunststoffe oder Holz, beispielsweise zur Oberflächenversiegelung von Holzkonstruktionen, Fahrzeugen, Ladeflächen, Tanks, Silos, Schächten, Rohrleitungen, Pipelines, Maschinen oder Stahlkonstruktionen, beispielsweise von Schiffen, Piers, Offshore-Plattformen, Schleusentoren, Wasserkraftwerken, Flussbauten, Schwimmbädern, Windkraftanlagen, Brücken, Kaminen, Kranen oder Spundwänden, oder als Voranstrich, Haftanstrich oder zur Hydrophobierung von Oberflächen.

Bevorzugt wird die beschriebene Epoxidharz-Zusammensetzung verwendet als Bodenbeschichtung, insbesondere in Innenräumen wie Büros, Industriehallen, Turnhallen oder Kühlräume, oder im Aussenbereich für Balkone, Terrassen, Parkdecks oder Brücken. Besonders bevorzugt wird sie verwendet als Deckbelag (Top Coat) oder Versiegelung, wo die Oberflächenqualität besonders wichtig ist.

Für die Verwendung als Bodenbeschichtung wird die Epoxidharz-Zusammensetzung insbesondere als selbstverlaufende oder leicht thixotropierte Beschichtung auf überwiegend ebene Flächen appliziert. Sie weist dabei bevorzugt eine flüssige Konsistenz mit niedriger Viskosität und guten Verlaufseigenschaften auf. Bevorzugt weist sie unmittelbar nach dem Vermischen der Harz- und der Härter-Komponente eine Viskosität, gemessen bei 20°C, im Bereich von 0.2 bis 4 Pa·s, besonders bevorzugt 0.3 bis 2 Pa.s, insbesondere 0.3 bis 1.5 Pa.s, auf. Die vermischte Zusammensetzung wird innerhalb der Verarbeitungszeit flächig als dünner Film mit einer Schichtdicke von typischerweise etwa 50 µm bis etwa 5 mm auf ein Substrat appliziert, typischerweise bei Umgebungstemperatur. Die Applikation erfolgt insbesondere durch Aufgiessen auf das zu beschichtende Substrat und anschliessendem gleichmässigem Verteilen mit beispielsweise einem Rakel oder einer Zahntraufel. Die Applikation kann auch mit einem Pinsel oder Roller oder als Spritzapplikation erfolgen.

Die Bodenbeschichtung ist insbesondere Bestandteil eines Bodenbelages umfassend
- gegebenenfalls eine Grundierung,
- gegebenenfalls eine Egalisierungsschicht,
- eine oder mehrere Lagen einer Basisschicht, auch Verschleissschicht genannt, welche gegebenenfalls mit Quarzsand abgestreut ist,
- und gegebenenfalls eine Versiegelung (Top Coat).

Die erfindungsgemässe Epoxidharz-Zusammensetzung kann dabei die Grundierung und/oder die Egalisierungsschicht und/oder die Basisschicht und/oder die Versiegelung des Bodenbelags darstellen. Bei weiteren, nicht der erfindungsgemässen Epoxidharz-Zusammensetzung entsprechenden Schichten kann es sich ebenfalls um Epoxidharz-Zusammensetzungen handeln, oder um ein anderes Material, insbesondere eine Polyurethan- oder Polyharnstoff-Beschichtung.

Als Grundierung kann die erfindungsgemässe Epoxidharz-Zusammensetztung weitgehend frei von Füllstoffen sein. Eine Grundierung wird aufgetragen, um den Untergrund zu benetzen, Staub und Schmutz zu binden, die Poren zu verschliessen und/oder den Untergrund zu egalisieren. Eine Grundierung wird in knapp deckender bis deckender Menge auf den Untergrund, insbesondere Beton, Mörtel, Gips oder Asphalt, appliziert.

Als Egalisierungsschicht enthält die erfindungsgemässe Epoxidharz-Zusammensetztung typischerweise Füllstoffen. Eine Egalisierungsschicht wird aufgetragen, um in einem sehr unebenen Untergrund Löcher und Vertiefungen zu füllen, sodass schliesslich eine weitgehend ebene Fläche für das Auftragen der Basisschicht zur Verfügung steht.

Als Basisschicht enthält die erfindungsgemässe Epoxidharz-Zusammensetztung typischerweise Füllstoffe. Die Basisschicht wird bevorzugt in einer Schichtdicke im Bereich von 0.5 bis 5 mm aufgetragen, gegebenenfalls in zwei oder mehr Arbeitsgängen, wobei die letzte Schicht gegebenenfalls mit Quarzsand abgestreut wird.

Als Versiegelung wird die erfindungsgemässe Epoxidharz-Zusammensetzung bevorzugt mittels Rolle in einer Schichtdicke im Bereich von 0.1 bis 1 mm, insbesondere 0.2 bis 0.5 mm, aufgetragen. Sie kann als transparente Versiegelung weitgehend ohne Füllstoffe oder in gefüllter und pigmentierter Form verwendet werden.

Aufgrund ihrer vorteilhaften Eigenschaften in Bezug auf Geruch, Verarbeitbarkeit, Härtungsgeschwindigkeit und Robustheit gegenüber Blushing-bedingten Fehlern ist die erfindungsgemässe Epoxidharz-Zusammensetztung besonders geeignet für alle Schichten eines Bodenbelags.

Aufgrund der erreichbaren geringen Emissionswerte ist die erfindungsgemässe Epoxidharz-Zusammensetztung besonders geeignet für Anwendungen im Innern von Gebäuden.

Aufgrund der hervorragenden Lichtechtheit bzw. Stabilität gegenüber Vergilbung wird die erfindungsgemässe Epoxidharz-Zusammensetztung besonders bevorzugt verwendet als Versiegelung, auch Deckbelag oder Top Coat genannt, insbesondere als letzte Schicht eines Bodenbelags.

Aus der Verwendung der Epoxidharz-Zusammensetzung entsteht ein Artikel. Ein weiterer Gegenstand der Erfindung ist somit ein Artikel umfassend die ausgehärtete Zusammensetzung, erhalten aus der beschriebenen Verwendung.

Die erfindungsgemässe Epoxidharz-Zusammensetzung ist ausgezeichnet verarbeitbar, härtet sehr schnell aus, vergilbt praktisch nicht und verfügt über eine harte, glänzende Oberfläche von hoher Qualität, auch bei Aushärtung unter feuchtkalten Bedingungen wie beispielsweise 8 °C und 80 % relativer Feuchte. Diese hervorragenden Eigenschaften werden insbesondere auch ohne Mitverwendung von Beschleunigern oder Verdünnern erreicht. Die erfindungsgemässe Epoxidharz-Zusammensetzung ist besonders geeignet für die Verwendung als Bodenbeschichtung, insbesondere als Deckbelag (Top Coat) bzw. Versiegelung, wo Emissionsfreiheit zusammen mit hohen Anforderungen an die Verarbeitbarkeit und die Ästhetik bestehen.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

"AHEW" steht für das Aminwasserstoff-Equivalentgewicht.

"EEW" steht für das Epoxid-Equivalentgewicht.

Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Sigma-Aldrich Chemie GmbH.

### Verwendete Substanzen:

| | |
|---|---|
| Modifier DW 1765 BD: | Paraffinwachs dispergiert in Bisphenol-A-Diglycidylether und Monoglycidylether von C₁₂- bis C₁₄-Alkoholen, EEW ca. 729 g/Eq (von Huntsman) |
| Araldite^{®} GY 250: | Bisphenol-A-Diglycidylether, EEW ca. 187.5 g/Eq (von Huntsman) |
| Epikote^{®} Resin 862: | Bisphenol-F-Diglycidylether, EEW ca. 169 g/Eq (von Momentive) |
| Araldite^{®} DY-E: | Monoglycidylether von C₁₂- bis C₁₄-Alkoholen, EEW ca. 290 g/Eq (von Huntsman) |
| 1,3-BAC: | 1,3-Bis(aminomethyl)cyclohexan, AHEW 35.5 g/Eq (von Mitsubishi Gas Chemical) |
| IPDA | 3-Aminomethyl-3,5,5-trimethylcyclohexylamin, AHEW 42.6 g/Eq (Vestamin^{®} IPD, von Evonik) |
| MXDA: | 1,3-Bis(aminomethyl)benzol, AHEW 34 g/Eq (von Mitsubishi Gas Chemical) |
| TMD: | 2,2,4- und 2,4,4-Trimethylhexamethylendiamin, AHEW 39.6 g/Eq (Vestamin^{®} TMD, von Evonik) |
| TETA: | Triethylentetramin (TETA), AHEW ca. 27 g/Eq (technisch, von Huntsman) |
| D-230: | Polyoxypropylendiamin mit mittlerem Molekulargewicht ca. 240 g/mol, AHEW 60 g/Eq (Jeffamine^{®} D-230, von Huntsman) |
| NB-EDA | N-Benzyl-1,2-ethandiamin, AHEW 50.1 g |

### Herstellung von Epoxidharz-Zusammensetzungen:

### Beispiele 1 bis 12:

Für jedes Beispiel wurden die in der Tabellen 1 angegebenen Inhaltsstoffe der Harz-Komponente in den angegebenen Mengen (in Gewichtsteilen) mittels eines Zentrifugalmischers (SpeedMixer^{™} DAC 150, FlackTek Inc.) vermischt und unter Ausschluss von Feuchtigkeit aufbewahrt.

Ebenso wurden die in der Tabellen 1 angegebenen Inhaltsstoffe der Härter-Komponente verarbeitet und aufbewahrt.

Anschliessend wurden die beiden Komponenten jeder Zusammensetzung mittels des Zentrifugalmischers zu einer homogenen Flüssigkeit verarbeitet und diese unverzüglich folgendermassen geprüft:
10 Minuten nach dem Vermischen wurde die Viskosität bei 20°C auf einem thermostatisierten Kegel-Platte-Viskosimeter Rheotec RC30 (Kegeldurchmesser 50 mm, Kegelwinkel 1°, Kegelspitze-Platte-Abstand 0.05 mm, Scherrate 10 s⁻¹) gemessen (**"Viskosität (10')").**

Ein erster Film wurde in einer Schichtdicke von 500 µm auf eine Glasplatte aufgezogen und dieser im Normklima gelagert bzw. ausgehärtet. An diesem Film wurde die **Königshärte** (Pendelhärte nach König, gemessen nach DIN EN ISO 1522) nach 1 Tag ("Königshärte (1d NK)"), nach 2 Tagen ("Königshärte (2d NK)"), nach 4 Tagen ("Königshärte (4d NK)"), nach 7 Tagen ("Königshärte (7d NK)") und nach 14 Tagen ("Königshärte (14d NK)") bestimmt. Nach 14 Tagen wurde der Aspekt des Films beurteilt (in der Tabelle mit "**Aspekt (NK)"** bezeichnet). Als "schön" wurde dabei ein Film bezeichnet, welcher klar war und eine glänzende und nichtklebrige Oberfläche ohne Struktur aufwies. Als "Struktur" wird dabei jegliche Art von Zeichnung oder Muster auf der Oberfläche bezeichnet.

Ein zweiter Film wurde in einer Schichtdicke von 500 µm auf eine Glasplatte aufgezogen und dieser unmittelbar nach dem Applizieren während 7 Tagen bei 8°C und 80% relativer Feuchtigkeit und anschliessend während 2 Wochen im Normklima gelagert, beziehungsweise ausgehärtet. 24 Stunden nach der Applikation wurde ein Flaschendeckel aus Polypropylen auf den Film aufgesetzt, unter welchem ein feuchtes Schwämmchen platziert war. Nach weiteren 24 Stunden wurde das Schwämmchen und der Deckel entfernt und an einer neuen Stelle des Films platziert, wo es nach 24 Stunden wieder entfernt und neu platziert wurde, insgesamt 4 mal. Anschliessend wurde der Aspekt dieses Films beurteilt (in den Tabellen mit "**Aspekt (8°/80%)"** bezeichnet), auf die gleiche Weise wie für den Aspekt (NK) beschrieben. Dabei wurde jeweils auch die Anzahl sichtbarer Marken angegeben, die im Film durch das feuchte Schwämmchen oder den aufgesetzten Ring entstanden waren. An den so ausgehärteten Filmen wurde wiederum die Königshärte bestimmt, jeweils nach 7 Tagen bei 8°C und 80% relativer Feuchtigkeit ("Königsh. (7d 8°/80%)"), dann nach weiteren 2 Tagen im NK ("Königsh. (+2d NK)") bzw. 7 Tagen im NK ("Königsh. (+7d NK)") bzw. 14d im NK ("Königsh. (+14d NK)"). Eine weisse Marke ist ein Zeichen für Blushing, verursacht durch das feuchte Schwämmchen unter dem Deckel. Ein Ring als Marke wird verursacht durch den aufgesetzten Deckel, welcher im Film einen Abdruck hinterlässt, und ist ein Zeichen für eine ungenügende Aushärtungsgeschwindigkeit der Zusammensetzung.

Als Mass für die Vergilbung wurde weiterhin die Farbveränderung nach Belastung in einem Bewitterungstester bestimmt. Dazu wurde ein weiterer Film in einer Schichtdicke von 500 µm auf eine Glasplatte aufgezogen und dieser im Normklima während 2 Wochen gelagert bzw. ausgehärtet und anschliessend in einem Bewitterungstester des Typs Q-Sun Xenon Xe-1 mit optischem Filter Q-SUN Daylight-Q und einer Xenon Lampe mit einer Lichtstärke von 0.51 W/m² bei 340 nm bei einer Temperatur von 65°C während 72 Stunden belastet **(Q-Sun (72h)).** Anschliessend wurde der Farbunterschied ΔE des so belasteten Films im Vergleich zum entsprechenden nicht belasteten Film mittels einem Colorimeter NH310 von Shenzen 3NH Technology Co. LTD, ausgerüstet mit Silicon Photoelectric Diode Detector, Light Source A, Color Space Measurement Interface CIE L*a*b*C*H*, bestimmt. ΔE-Werte von 0.5 bis 2 stehen dabei für eine geringfügigeVergilbung, 2 bis 4 für eine leichte Vergilbung, 4 bis 6 für eine deutliche Vergilbung und mehr als 6 für eine starke Vergilbung.

Die Resultate sind in der Tabelle 1 angegeben.

Die mit "(Ref.)" bezeichneten Beispiele sind Vergleichsbeispiele.

**Tabelle 1: Zusammensetzung und Eigenschaften der Beispiele 1 bis 12. "n.m." steht für "nicht messbar" (noch klebrig)**

| **Beispiel** | | **1** | **2 (Ref.)** | **3 (Ref.)** | **4 (Ref.)** | **5 (Ref.)** | **6 (Ref.)** |
|---|---|---|---|---|---|---|---|
| **Harz-Komponente:** | | | | | | | |
| Araldite^{®} GY 250 | | 80.5 | 80.5 | 80.5 | 80.5 | 80.5 | 80.5 |
| Epikote^{®} Resin 862 | | 80.5 | 80.5 | 80.5 | 80.5 | 80.5 | 80.5 |
| Araldite^{®} DY-E | | 26.1 | 26.1 | 26.1 | 26.1 | 26.1 | 26.1 |
| Modifier DW 1765 BD | | 2.3 | 2.3 | 2.3 | 2.3 | 2.3 | 2.3 |

| **Härter-Komponente:** | | | | | | | |
|---|---|---|---|---|---|---|---|
| | Amin | **1,3-BAC** | **IPDA** | **MXDA** | **TMD** | **TETA** | **D230** |
| | | 35.5 | 42.6 | 34.0 | 39.6 | 30.0 | 60.0 |
| Viskosität (10') [Pa·s] | | 0.51 | 0.65 | 0.46 | 0.42 | 0.71 | 0.31 |
| Königshärte [s] | (1d NK) | 179 | 97 | 207 | 164 | 206 | n.m. |
| | (2d NK) | 227 | 195 | 237 | 206 | 214 | 6 |
| | (4d NK) | 225 | 211 | 225 | 223 | 224 | 98 |
| | (7d NK) | 238 | 231 | 236 | 228 | 234 | 171 |
| | (14d NK) | 239 | 234 | 236 | 231 | 236 | 200 |
| Aspekt (NK) | | schön | schön | trüb | schön | trüb | schön |
| Q-Sun (72h) ΔE | | 1.9 | 3.5 | 9.9 | 8.4 | 3.0 | 4.7 |
| Königsh. [s] | (7d 8°/80%) | 182 | 139 | 174 | 91 | 167 | 7 |
| | (+2d NK) | 225 | 213 | 213 | 202 | 192 | 150 |
| | (+7d NK) | 231 | 220 | 225 | 218 | 200 | 195 |
| | (+14d NK) | 231 | 227 | 227 | 222 | 207 | 204 |
| Aspekt (8°/80%) | | schön | matt | trüb | matt | trüb, klebrig | schön |
| Marken | | keine | 1x Ring | keine | 1x Ring | keine | 3x Ring |

**Tabelle 1: (Fortsetzung)**

| **Beispiel** | | **7 (Ref.)** | **8 (Ref.)** | **9 (Ref.)** | **10 (Ref.)** | **11 (Ref.)** | **12 (Ref.)** |
|---|---|---|---|---|---|---|---|
| **Harz-Komponente:** | | | | | | | |
| Araldite^{®} GY 250 | | 80.5 | 80.5 | 80.5 | 80.5 | 80.5 | 80.5 |
| Epikote^{®} Resin 862 | | 80.5 | 80.5 | 80.5 | 80.5 | 80.5 | 80.5 |
| Araldite^{®} DY-E | | 26.1 | 26.1 | 26.1 | 26.1 | 26.1 | 26.1 |
| Modifier DW 1765 BD | | - | - | - | - | - | - |

| **Härter-Komponente:** | | | | | | | |
|---|---|---|---|---|---|---|---|
| | Amin | **1,3-BAC** | **IPDA** | **MXDA** | **TMD** | **TETA** | **D230** |
| | | 35.5 | 42.6 | 34.0 | 39.6 | 30.0 | 60.0 |
| Viskosität (10') [Pa·s] | | 0.48 | 0.65 | 0.43 | 0.36 | 0.69 | 0.29 |
| Königshärte [s] | (1d NK) | 25 | 57 | 39 | 36 | 6 | n.m. |
| | (2d NK) | 91 | 105 | 35 | 39 | 6 | 28 |
| | (4d NK) | 92 | 164 | 46 | 41 | 6 | 126 |
| | (7d NK) | 91 | 119 | 36 | 60 | 8 | 112 |
| | (14d NK) | 80 | 190 | 52 | 43 | 25 | 203 |
| Aspekt (NK) | | Struktur | matt | trüb | Struktur | Struktur | schön |
| Q-Sun (72h) ΔE | | 6.0 | 4.6 | 12.9 | 11.6 | 11.9 | 4.6 |
| Königsh. [s] | (7d 8°/80%) | 25 | 28 | 4 | 1 | 10 | 1 |
| | (+2d NK) | 27 | 71 | 8 | 6 | 7 | 3 |
| | (+7d NK) | 17 | 88 | 11 | 11 | 3 | 3 |
| | (+14d NK) | 11 | 77 | 14 | 22 | 6 | 4 |
| Aspekt (8°/80%) | | Struktur | matt | trüb | Struktur | trüb, klebrig | klebrig |
| Marken | | 4x leicht weiss | 4x weiss | 4x weiss | 4x Ring | 4x weiss | 4x Ring |

### Beispiele 13 bis 16:

Für jedes Beispiel wurden die in der Tabelle 2 angegebenen Inhaltsstoffe der Harz-Komponente in den angegebenen Mengen (in Gewichtsteilen) vermischt und unter Ausschluss von Feuchtigkeit aufbewahrt.

Ebenso wurden die in der Tabelle 2 angegebenen Inhaltsstoffe der Härter-Komponente vermischt und aufbewahrt.

Anschliessend wurden die beiden Komponenten jeder Zusammensetzung mittels einer Bohrmaschine mit Rührstab zu einer homogenen Flüssigkeit verarbeitet und diese unverzüglich folgendermassen geprüft:
Unmittelbar nach dem Vermischen der Komponenten wurde die Viskosität bei 23°C auf einem thermostatisierten Platte-Platte-Viskosimeter von Anton Paar (Durchmesser 50 mm, Abstand 0.5 mm, Scherrate 10 s⁻¹) gemessen **(Mischviskosität (23°C)).**

Die **Shore D** Härte wurde an zylindrische Prüfkörpern mit einer Dicke von 5 mm nach einer Lagerung im Normklima von 7 Tagen bzw. 14 Tagen bestimmt.

Die **Zugfestigkeit** und die **Bruchdehnung** wurden bestimmt, indem die vermischte Zusammensetzung in einer Schichtdicke von 2 mm auf eine Silikonplatte aufgebracht und im Normklima gelagert wurde. Nach 1 Tag wurde der angehärtete Film von der Silikonplatte abgelöst, daraus hantelförmige Prüfkörper mit einer Länge von 75 mm bei einer Steglänge von 30 mm und einer Stegbreite von 4 mm ausgestanzt und die Prüfkörper nach einer Aushärtungszeit von insgesamt 7 Tagen bei einer Zuggeschwindigkeit von 2 mm/min gemäss DIN EN ISO 527-2 geprüft.

Für die Bestimmung der **Emission** von schwerflüchtigen organischen Verbindungen nach ISO 16000-25 wurden Petrischalen mit einem Duchmesser von 36 mm in einer Schichtdicke von 0.7 mm mit der vermischten Zusammensetzung befüllt und im Normklima gelagert. Nach 6 Tagen und nach 31 Tagen wurde die Emission in einer Mikrokammer bei einem Stickstoff-Durchfluss von 75 ml/min (entsprechend einer Luftwechselrate von 100/h) bestimmt. Für die 6 Tages Werte erfolgte die quantitative Bestimmung der im Stickstoffstrom detektierten Verbindungen mittels GC/MS, für die 31 Tages Werte mittels GC/FID. Dabei wurden alle detektierten Verbindungen ausser Benzylalkohol als Toluol-Equivalente, und Benzylalkohol als Benzylalkohol-Equivalent, mittels Kalibration mit Toluol bzw. Benzylalkohol anhand der Peak-Flächen quantifiziert. Die Resultate sind angegeben als Summe der Toluol- und Benzylalkohol-Equivalente und extrapoliert auf den europäischen Referenzraum.

Zur Bestimmung der **Schlagfestigkeit** wurden sandgestrahlte Betonplatten der Dimension 300 x 300 x 40 mm auf der sandgestrahlten Fläche mit 120 g Sikafloor^{®}-161 (2-komponentige Grundierung auf Epoxidharz-Basis, von Sika), verfüllt mit zusätzlich 60 g Quarzsand (Körnung 0.1 bis 0.4 mm), beschichtet (2 kg/m²) und während 24 Stunden im Normklima gelagert. Auf die so grundierten Betonplatten wurde die vermischte Zusammensetzung in einer Schichtdicke von 3 mm appliziert und während 7 Tagen im Normklima gelagert. An dieser Beschichtung wurde die Schlagfestigkeit nach ISO 6272 bestimmt, wobei die Fläche an unterschiedlichen Stellen fünfmal mit je 6 bzw. 8 bzw. 10 bzw. 12 bzw. 14 bzw. 16 Nm belastet wurde. Als Resultat für die Schlagfestigkeit wurde die maximale Belastung angegeben, bei welcher mindestens 4 der 5 Fallprüfungen ohne sichtbare Beschädigung der Beschichtung erfolgten.

Der **Aspekt** wurde an den für die Bestimmung der Schlagfestigkeit hergestellen beschichteten Betonplatten beurteilt. Als "schön" wurde eine ebenmässige, klare, glänzende Oberfläche ohne Flecken oder Karter bezeichnet.

**Tabelle 2: Zusammensetzung und Eigenschaften der Beispiele 13 bis 16. "n.b." steht für "nicht bestimmt"**

| **Beispiel** | | **13** | **14** | **15** | **16** |
|---|---|---|---|---|---|
| **Harz-Komp.:** | | | | | |
| Araldite^{®} GY 250 | | 56.08 | 54.01 | 50.60 | 47.16 |
| Epikote^{®} Resin 862 | | 14.03 | 13.51 | 12.65 | 11.79 |
| Araldite^{®} DY-E | | 11.36 | 10.94 | 10.26 | 9.55 |
| Modifier DW 1765 BD | | 0.92 | 0.89 | 0.84 | 0.78 |
| Entschäumer | | 1.85 | 1.78 | 1.67 | 1.57 |

| **Härter-Komp.:** | | | | | |
|---|---|---|---|---|---|
| 1,3-BAC | | 12.76 | 12.07 | 11.50 | 10.30 |
| NB-EDA | | 3.00 | 2.84 | 2.71 | 2.42 |
| Benzylalkohol | | - | 3.96 | 9.77 | 16.43 |
| Mischviskosität (23°C) | | 0.29 Pa·s | 0.29 Pa·s | 0.25 Pa·s | 0.15 Pa·s |
| Shore D | (nach 7d) | 78 | 74 | 72 | 37 |
| | (nach 14d) | 78 | 75 | 73 | 45 |
| Zugfestigkeit [MPa] | | 35.6 | n.b. | 34.8 | n.b. |
| Bruchdehnung [%] | | 1.50 | | 3.40 | |
| Emission [µg/m³] | (nach 6d) | 2164 | 1933 | | |
| | (nach 31d) | 459 | 598 | n.b. | n.b. |
| Schlagfestigkeit [Nm] | | 6 | n.b. | 14 | n.b. |
| Aspekt | | schön | n.b. | schön | n.b. |

## Patentansprüche

1. Epoxidharz-Zusammensetzung umfassend mindestens ein Epoxid-Flüssigharz, Bis(aminomethyl)cyclohexan und mindestens ein Wachs.

2. Zusammensetzung gemäss Anspruch 1, **dadurch gekennzeichnet, dass** das Wachs langkettige Fettsäureester und/oder langkettige Kohlenwasserstoffe mit einem Molekulargewicht im Bereich von 250 bis 1'000 g/mol enthält.

3. Zusammensetzung gemäss einem der Ansprüche 1 bis 2, **dadurch gekennzeichnet, dass** das Wachs als Dispersion in einem nichtwässrigen Medium vorliegt.

4. Zusammensetzung gemäss Anspruch 3, **dadurch gekennzeichnet, dass** das nichtwässrige Medium eine Verbindung ausgewählt aus der Gruppe bestehend aus Bisphenol-A-Diglycidylether, Bisphenol-F-Diglycidylether, Bisphenol-A/F-Diglycidylether, Dipropylenglykoldiglycidylether, Tripropylenglykoldiglycidylether, Diglycidylether von Polypropylenglykolen, 1,4-Butandioldiglycidylether, 1,6-Hexandioldiglycidylether, Dimethylolcyclohexandiglycidylether, Kresylglycidylether, 4-Methoxyphenylglycidylether, p-n-Butylphenylglycidylether, p-tert.Butylphenylglycidylether, 4-Nonylphenylglycidylether, 4-Dodecylphenylglycidylether, Cardanolglycidylether, Benzylglycidylether, 2-Ethylhexylglycidylether, Glycidylether von natürlichen Alkoholen, insbesondere C₈- bis C₁₀-, C₁₂- bis C₁₄- oder C₁₃- bis C₁₅-Alkylglycidylether, und Kombinationen der genannten Verbindungen ist.

5. Zusammensetzung gemäss einem der Ansprüche 1 bis 4, **dadurch gekennzeichnet, dass** das Wachs ein Paraffinwachs, welches dispergiert in einer Mischung aus Bisphenol-A-, -F- oder -A/F-Diglycidylether und Alkylglycidylether, insbesondere C₈- bis C₁₀-, C₁₂- bis C₁₄- oder C₁₃- bis C₁₅-Alkylglycidylether, vorliegt, ist.

6. Zusammensetzung gemäss einem der Ansprüche 1 bis 5, **dadurch gekennzeichnet, dass** 0.1 bis 10, bevorzugt 0.2 bis 5, Gewichtsteile Wachs bezogen auf 100 Gewichtsteile Epoxidgruppen-haltige Bestandteile enthalten sind.

7. Zusammensetzung gemäss einem der Ansprüche 1 bis 6, **dadurch gekennzeichnet, dass** sie mindestens einen weiteren Bestandteil ausgewählt aus Epoxidgruppen-haltigen Reaktivverdünnern, weiteren Polyaminen, Beschleunigern, Verdünnern und Füllstoffen enthält.

8. Zusammensetzung gemäss Anspruch 7, **dadurch gekennzeichnet, dass** ein Gehalt an Verdünner, insbesondere Benzylalkohol, im Bereich von 1 bis 15 Gewichts-%, bevorzugt 2 bis 10 Gewichts-%, enthalten ist.

9. Zusammensetzung gemäss einem der Ansprüche 1 bis 8, **dadurch gekennzeichnet, dass** der Gehalt an Bis(aminomethyl)cyclohexan bezogen auf die Summe der Amine mindestens bei 50 Gewichts-% liegt.

10. Zusammensetzung gemäss einem der Ansprüche 1 bis 9, **dadurch gekennzeichnet, dass** sie in Form einer zwei- oder mehrkomponentigen Zusammensetzung vorliegt und
- eine Harz-Komponente, welche mindestens ein Epoxid-Flüssigharz und gegebenenfalls weitere Epoxidgruppen aufweisende Verbindungen enthält, und
- eine Härter-Komponente, welche Bis(aminomethyl)cyclohexan und gegebenenfalls weitere Polyamine oder Härter enthält,
umfasst, wobei das Wachs als Bestandteil der Harz-Komponente oder der Härter-Komponente oder von beiden Komponenten vorliegt.

11. Ausgehärtete Zusammensetzung erhalten aus der Aushärtung der Epoxidharz-Zusammensetzung gemäss Anspruch 10 nach dem Vermischen der Komponenten.

12. Verwendung der Zusammensetzung gemäss einem der Ansprüche 1 bis 11 als Bodenbeschichtung.

13. Verwendung gemäss Anspruch 12, **dadurch gekennzeichnet, dass** die Bodenbeschichtung Bestandteil eines Bodenbelags ist, umfassend
- gegebenenfalls eine Grundierung,
- gegebenenfalls eine Egalisierungsschicht,
- eine oder mehrere Lagen einer Basisschicht, welche gegebenenfalls mit Quarzsand abgestreut ist,
- und gegebenenfalls eine Versiegelung.

14. Verwendung gemäss einem der Ansprüche 12 oder 13, **dadurch gekennzeichnet, dass** die Bodenbeschichtung eine Versiegelung ist.

15. Artikel erhalten aus der Verwendung gemäss einem der Ansprüche 12 bis 14 umfassend die ausgehärtete Zusammensetzung gemäss Anspruch 11.

## Claims

1. Epoxy resin composition comprising at least one liquid epoxy resin, bis(aminomethyl)cyclohexane, and at least one wax.

2. Composition according to Claim 1, **characterized in that** the wax contains long-chain fatty acid esters and/or long-chain hydrocarbons having a molecular weight in the range from 250 to 1000 g/mol.

3. Composition according to either of Claims 1 and 2, **characterized in that** the wax is in the form of a dispersion in a non-aqueous medium.

4. Composition according to Claim 3, **characterized in that** the non-aqueous medium is a compound selected from the group consisting of bisphenol A diglycidyl ether, bisphenol F diglycidyl ether, bisphenol A/F diglycidyl ether, dipropylene glycol diglycidyl ether, tripropylene glycol diglycidyl ether, diglycidyl ethers of polypropylene glycols, butane-1,4-diol diglycidyl ether, hexane-1,6-diol diglycidyl ether, dimethylolcyclohexane diglycidyl ether, cresyl glycidyl ether, 4-methoxyphenyl glycidyl ether, p-n-butylphenyl glycidyl ether, p-tert-butylphenyl glycidyl ether, 4-nonylphenyl glycidyl ether, 4-dodecylphenyl glycidyl ether, cardanol glycidyl ether, benzyl glycidyl ether, 2-ethylhexyl glycidyl ether, glycidyl ethers of natural alcohols, in particular C₈- to C₁₀-alkyl, C₁₂- to C₁₄-alkyl or C₁₃- to C₁₅-alkyl glycidyl ethers, and combinations of the recited compounds.

5. Composition according to any of Claims 1 to 4, **characterized in that** the wax is a paraffin wax in the form of a dispersion in a mixture of bisphenol A, F or A/F diglycidyl ethers and alkyl glycidyl ethers, in particular C₈- to C₁₀-alkyl, C₁₂- to C₁₄-alkyl or C₁₃- to C₁₅-alkyl glycidyl ethers.

6. Composition according to any of Claims 1 to 5, **characterized in that** it contains 0.1 to 10, preferably 0.2 to 5, parts by weight of wax based on 100 parts by weight of epoxy group-containing constituents.

7. Composition according to any of Claims 1 to 6, **characterized in that** it comprises at least one further constituent selected from reactive diluents containing epoxy groups, further polyamines, accelerators, thinners, and fillers.

8. Composition according to Claim 7, **characterized in that** it includes a content of a thinner, in particular benzyl alcohol, in the range from 1% to 15% by weight, preferably 2% to 10% by weight.

9. Composition according to any of Claims 1 to 8, **characterized in that** the content of bis(aminomethyl)cyclohexane based on the sum of the amines is at least 50% by weight.

10. Composition according to any of Claims 1 to 9, **characterized in that** it is in the form of a composition having two or more components and includes
- a resin component that comprises at least one liquid epoxy resin and optionally further compounds having epoxy groups, and
- a curing agent component that comprises bis(aminomethyl)cyclohexane and optionally further polyamines or curing agents,
wherein the wax is present as a constituent of the resin component or of the curing agent component or of both components.

11. Cured composition obtained from curing the epoxy resin composition according to Claim 10 after mixing the components.

12. Use of the composition according to any of Claims 1 to 11 as a floor coating.

13. Use according to Claim 12, **characterized in that** the floor coating is an element of a floor covering comprising
- optionally a basecoat,
- optionally a leveling layer,
- one or more layers of a base layer, which is optionally sprinkled with quartz sand,
- and optionally a seal.

14. Use according to either of Claims 12 to 13, **characterized in that** the floor coating is a seal.

15. Article obtained from the use according to any of Claims 12 to 14 including the cured composition according to Claim 11.

## Revendications

1. Composition de résine époxyde, comprenant au moins une résine époxyde liquide, du bis(aminométhyl)cyclohexane et au moins une cire.

2. Composition selon la revendication 1, **caractérisée en ce que** la cire contient des esters d'acides gras à longue chaîne et/ou des hydrocarbures à longue chaîne présentant un poids moléculaire dans la plage de 250 à 1000 g/mole.

3. Composition selon l'une des revendications 1 à 2, **caractérisée en ce que** la cire se trouve sous forme d'une dispersion dans un milieu non aqueux.

4. Composition selon la revendication 3, **caractérisée en ce que** le milieu non aqueux est un composé choisi dans le groupe constitué par le bisphénol-A-diglycidyléther, le bisphénol-F-diglycidyléther, le bisphénol-A/F-diglycidyléther, le dipropylèneglycoldiglycidyléther, le tripropylèneglycoldiglycidyléther, le diglycidyléther de polypropylèneglycols, le 1,4-butanedioldiglycidyléther, le 1,6-hexanedioldiglycidyléther, le diméthylolcyclohexanediglycidyléther, le crésylglycidyléther, le 4-méthoxyphénylglycidyléther, le p-n-butylphénylglycidyléther, le p-tert-butylphénylglycidyléther, le 4-nonylphénylglycidyléther, le 4-dodécylphénylglycidyléther, le cardanolglycidyléther, le benzylglycidyléther, le 2-éthylhexylglycidyléther, les glycidyléthers d'alcools naturels, en particulier les C₈-C₁₀-alkylglycidyléthers, les C₁₂-C₁₄-alkylglycidyléthers ou les C₁₃-C₁₅-alkylglycidyléthers et les combinaisons des composés mentionnés.

5. Composition selon l'une des revendications 1 à 4, **caractérisée en ce que** la cire est une cire de paraffine qui se trouve sous forme dispersée dans un mélange de bisphénol-A-diglycidyléther, de bisphénol-F-diglycidyléther ou de bisphénol-A/F-diglycidyléther et d'alkylglycidyléthers, en particulier de C₈-C₁₀-alkylglycidyléthers, de C₁₂-C₁₄-alkylglycidyléthers ou de C₁₃-C₁₅-alkylglycidyléthers.

6. Composition selon l'une des revendications 1 à 5, **caractérisée en ce qu'**elle contient 0,1 à 10, de préférence 0,2 à 5 parties en poids de cire par rapport à 100 parties en poids de constituants contenant des groupes époxyde.

7. Composition selon l'une des revendications 1 à 6, **caractérisée en ce qu'**elle contient au moins un autre constituant choisi parmi les diluants réactifs contenant des groupes époxyde, d'autres polyamines, des accélérateurs, des diluants et des charges.

8. Composition selon la revendication 7, **caractérisée en ce qu'**elle contient une teneur en diluant, en particulier en alcool benzylique, dans la plage de 1 à 15% en poids, de préférence de 2 à 10% en poids.

9. Composition selon l'une des revendications 1 à 8, **caractérisée en ce que** la teneur en bis (aminométhyl)cyclohexane, par rapport à la somme des amines, est d'au moins 50% en poids.

10. Composition selon l'une des revendications 1 à 9, **caractérisée en ce qu'**elle se trouve sous forme de composition à deux composants ou plus et comprend
- un composant de résine, qui contient au moins une résine époxyde liquide et le cas échéant d'autres composés présentant des groupes époxyde et
- un composant durcisseur, qui contient du bis(aminométhyl)cyclohexane et le cas échéant d'autres polyamines ou durcisseurs,
la cire se trouvant sous forme de constituant du composant de résine ou du composant durcisseur ou des deux composants.

11. Composition durcie obtenue à partir du durcissement de la composition de résine époxyde selon la revendication 10 après le mélange des composants.

12. Utilisation de la composition selon l'une des revendications 1 à 11 comme revêtement de sol.

13. Utilisation selon la revendication 12, **caractérisée en ce que** le revêtement de sol est un constituant d'un recouvrement de sol, comprenant
- le cas échéant un apprêt,
- le cas échéant une couche d'égalisation,
- une ou plusieurs couches d'une couche de base, qui est le cas échéant saupoudrée de sable de quartz,
- et le cas échéant un enduit de scellement.

14. Utilisation selon l'une des revendications 12 ou 13, **caractérisée en ce que** le revêtement de sol est un enduit de scellement.

15. Article obtenu à partir de l'utilisation selon l'une des revendications 12 à 14 comprenant la composition durcie selon la revendication 11.
